# EUROPEAN PATENT APPLICATION

(11) **EP 4 529 114 A1**
(43) Date of publication of application: **26.03.2025**
(21) Application number: 24201550.1
(22) Date of filing: 20.09.2024
(51) Int. Cl.: H04L 41/00, H04W 24/02

(54) **ARTIFICIAL INTELLIGENCE/MACHINE LEARNING (AI-ML) INFERENCE FUNCTION MANAGEMENT**

(30) Priority: 22.09.2023 US 202363584761 P
(71) Applicant: Intel Corporation, Santa Clara, CA 95054 (US)
(72) Inventor: YAO, Yizhi, Chandler (US)
(74) Representative: Viering, Jentschura & Partner mbB Patent- und Rechtsanwälte

(57) **Abstract**

A computer-readable medium may include instructions which, if executed by a processor, may cause the processor to: receive a request from a management service, MnS, consumer to manage an artificial intelligence and/or machine learning, AI/ML, inference function; manage the AI/ML inference function; and respond to the MnS consumer to indicate the result of the management of the AI/ML inference function.

## Description

### TECHNICAL FIELD

Various embodiments generally may relate to the field of wireless communications.

### BACKGROUND

Artificial intelligence and/or machine learning (AI/ML or AI-ML) techniques and relevant applications are being increasingly adopted by the wider industries and have proved to be successful. These are now being applied to the telecommunication industry including mobile networks. Although AI/ML techniques in general are quite mature nowadays, some of the relevant aspects of the technology are still evolving while new complementary techniques are frequently emerging.

### BRIEF DESCRIPTION OF THE DRAWINGS

FIG. 1 shows an example AI/ML operational workflow.
FIG. 2 shows an example of a diagram for Relationships in accordance with various aspects described herein.
FIG. 3 shows an example of a diagram for Inheritence in accordance with various aspects described herein.
FIG. 4 illustrates a network 400 in accordance with various embodiments.
FIG. 5 schematically illustrates a wireless network 500 in accordance with various embodiments.
FIG. 6 is a block diagram illustrating components, according to some example embodiments.
FIG. 7 illustrates a network 700 in accordance with various embodiments.
FIG. 8 illustrates a simplified block diagram of artificial (AI)-assisted communication.
FIG. 9 shows an example of a process in accordance with various aspects described herein.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

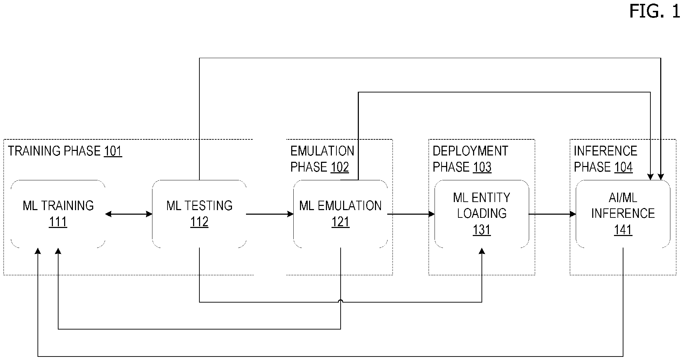

FIG. 1 shows an example AI/ML operational workflow in the lifecycle of an ML entity. For example, the ML entity described herein may be an ML model. The direction of the depicted arrows represents the sequence of the flow. AI/ML techniques are widely used in fifth generation fifth generation (5G) systems (collectively, 5GS) (including 5G core (5GC), next generation radio access networks (NG-RAN), management system(s), etc.).

The workflow may involve one or more of the following four phases; training, emulation, deployment, and inference phase. Examples tasks for each phase may include one or more of the following phases:

Training phase 101:
- ML training 111: training, including initial training and re-training, of an ML entity or a group of ML entities. ML training 111 may also include validation of the trained ML entity to evaluate the performance variance when the ML entity performs on the training data and validation data. If the validation result does not meet the expectation (e.g., the variance is not acceptable), the ML entity may need to be re-trained. The ML training 111 is the initial phase of the workflow.
- ML testing 112: testing of the validated ML entity to evaluate the performance of the trained ML entity when it performs on testing data. If the testing result meets the expectation, the ML entity may proceed to the next phase, otherwise the ML entity may need to be re-trained.

Emulation phase 102:
- ML emulation 121: running an ML entity or AI/ML inference function for inference in an emulation environment. One purpose may be to evaluate the inference performance of the ML entity or AI/ML inference function in the emulation environment prior to applying it to the target network or system.

NOTE: The emulation phase 102 may be considered optional and may be skipped in the AI/ML operational workflow.

Deployment phase 103:
- ML entity loading 131: loading of a trained ML entity to the target AI/ML inference function which will use it for inference.

NOTE: The deployment phase 103 may not be needed in some cases, for example when the training function and inference function are co-located.

Inference phase 104:
- AI/ML inference 141: performing inference using the ML entity by the AI/ML inference function.

The AI/ML inference function may need to be managed.

Embodiments herein may relate to AI/ML inference function management. Embodiments may include the use of Information Object Classes (IOCs) that are managed via an operations and notifications of generic provisioning management service that may be similar to that defined in the third generation partnership project (3GPP) technical specification (TS) 28.532. It will be noted that the various IOC names and attribute names use herein may be considered to be non-limiting examples of such names. In other embodiments, the IOCs and/or attributes may have different names, but still perform same or similar functions to those described herein. In some embodiments, certain ones of the IOCs and/or the attributes may be combined, or split into multiple IOCs and/or attributes.

Embodiments herein may provide processes or techniques for the consumer (e.g., operator) to manage the AI/ML inference functions which use the one or more ML entity for inference via Management Service (MnS). The techniques may provide the consumer an explicit view of the AI/ML inference functions and the subordinated ML entities, and allow the consumer to manage the AI/ML inference functions and the ML entities via the instances of the IOCs that can be managed by the operations (createMOI, getMOIAttributes, modifyMOIAttributes etc.) and notifications of generic provisioning management service such as those defined in 3GPP TS 28.532.

### 1. IOCs supporting management AI/ML inference functions (which may be introduced to the 3GPP TS 28.105)

### 1.1 Imported information entities and local labels

**Table1.2.1-1**

| **Label reference** | **Local label** |
|---|---|
| 3GPP TS 28.622 [12], IOC, Top | Top |
| 3GPP TS 28.622 [12], IOC, SubNetwork | SubNetwork |
| 3GPP TS 28.622 [12], IOC, ManagedElement | ManagedElement |
| 3GPP TS 28.622 [12], IOC, ManagedFunction | ManagedFunction |
| 3GPP TS 28.541 [x], IOC, GNBCUCPFunction | GNBCUCPFunction |
| 3GPP TS 28.541 [x], IOC, NWDAFFunction | NWDAFFunction |
| 3GPP TS 28.104 [2], IOC, MDAFunction | MDAFunction |

### 1.2 MLEntity

### 1.2.1 Definition

This IOC represents the ML entity. The algorithm of ML model or ML entity is not to be standardized.

The MLEntity may contain 3 types of contexts - TrainingContext which is the context under which the MLEntity has been trained, the ExpectedRunTimeContext which is the context where an MLEntity is expected to be applied or/and the RunTimeContext which is the context where the ML entity is being applied.

### 1.2.2 Attributes

**Table 1.2.2 -1**

| **Attribute name** | **Support Qualifier** | **isReadable** | **isWritable** | **isInvariant** | **isNotifyable** |
|---|---|---|---|---|---|
| mLEntityId | M | T | F | F | T |
| inferenceType | M | T | F | F | T |
| mLEntityVersion | M | T | F | F | T |
| expectedRunTimeContext | O | T | F | F | T |
| trainingContext | CM | T | F | F | T |
| runTimeContext | O | T | F | F | T |

| **Attribute related to role** | | | | | |
|---|---|---|---|---|---|
| sourceTrainedMLEntityRef | CM | T | F | F | T |

### 1.2.3 Attribute constraints

**Table 1.2.3-1**

| **Name** | **Definition** |
|---|---|
| trainingContext Support Qualifier | Condition: The trainingContext represents the status and conditions related to training and should be added when training is completed. |
| sourceTrainedMLEntityRef Support Qualifier | Condition: The MLEntity MOI containing this attribute represents an ML entity loaded to an inference function. |

### 1.3 Information model definitions for ML inference phase

### 1.3.1 Class diagram

### 1.3.1.1 Relationships

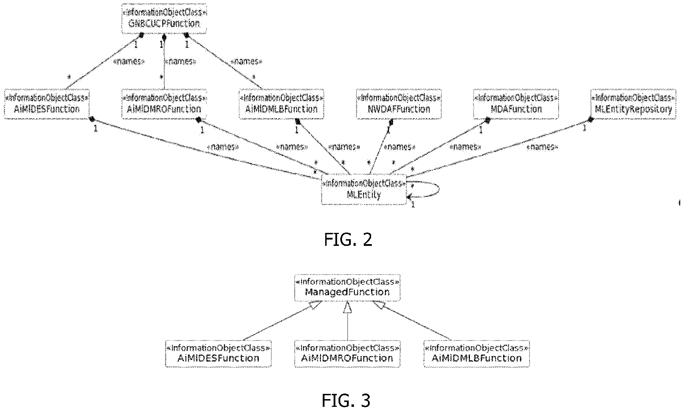

FIG. 2 shows an example of a diagram for the Relationships, illustratively as Figure 1.3.1.1-1: NRM fragment for intelligence functions.

### 1.3.1.2 Inheritance

FIG. 3 shows an example of a diagram for the Inheritence, illustratively as Figure 1.3.1.2-1: Inheritence Hierarchy for intelligence functions.

### 1.3.2 AiMIDESFunction

### 1.3.2.1 Definition

This IOC represents the AI/ML-based distributed Energy Saving function (see 3GPP TS 38.300 [16]).

The AI/ML-based distributed Energy Saving function is a type of AI/ML inference function, which uses one or more ML entities for inference.

The AiMIDESFunction MOI contains one or more MOI(s) of MLEntity representing the ML entities loaded to this AI/ML-based distributed Energy Saving function.

Each MLEntity MOI contained by the AiMIDESFunction MOI is associated with one MLEntity MOI contained by MLEntityRepository MOI, to represent the ML entity contained by the AiMIDESFunction MOI is the copy of the source ML entity generated by ML training that has been loaded from the ML entity repository presented by the MLEntityRepository MOI.

### 1.3.2.2 Attributes

| **Attribute name** | **Support Qualifier** | **isReadable** | **isWritable** | **isInvariant** | **isNotifyable** |
|---|---|---|---|---|---|
| activationStatus | M | T | T | F | T |

| **Attribute related to role** | | | | | |
|---|---|---|---|---|---|
| | | | | | |

### 1.3.2.3 Attribute constraints

None.

### 1.3.3 AiMIDMROFunction

### 1.3.3.1 Definition

This IOC represents the AI/ML-based distributed Mobility Robustness Optimization function (see 3GPP TS 38.300 [16]).

The AI/ML-based distributed Mobility Robustness Optimization function is a type of AI/ML inference function, which uses one or more ML entities for inference.

The AiMlDMROFunction MOI contains one or more MOI(s) of MLEntity representing the ML entities loaded to this AI/ML-based distributed Mobility Robustness Optimization.

Each MLEntity MOI contained by the AiMlDMROFunction MOI is associated with one MLEntity MOI contained by MLEntityRepository MOI, to represent the ML entity contained by the AiMlDMROFunction MOI is the copy of the source ML entity generated by ML training that has been loaded from the ML entity repository presented by the MLEntityRepository MOI. 1.3.3.2 Attributes

| **Attribute name** | **Support Qualifier** | **isReadable** | **isWritable** | **isInvariant** | **isNotifyable** |
|---|---|---|---|---|---|
| activationStatus | M | T | T | F | T |

| **Attribute related to role** | | | | | |
|---|---|---|---|---|---|
| | | | | | |

### 1.3.3.3 Attribute constraints

None.

### 1.3.4 AiMlDMLBFunction

### 1.3.4.1 Definition

This IOC represents the AI/ML-based distributed Mobility Load Balancing function (see 3GPP TS 38.300 [16]).

The AI/ML-based distributed Mobility Load Balancing function is a type of AI/ML inference function, which uses one or more ML entities for inference.

The AiMlDMLBFunction MOI contains one or more MOI(s) of MLEntity representing the ML entities loaded to this AI/ML-based distributed Mobility Load Balancing function.

Each MLEntity MOI contained by the AiMlDMLBFunction MOI is associated with one MLEntity MOI contained by MLEntityRepository MOI, to represent the ML entity contained by the AiMlDMLBFunction MOI is the copy of the source ML entity generated by ML training that has been loaded from the ML entity repository presented by the MLEntityRepository MOI. 1.3.4.2 Attributes

| **Attribute name** | **Support Qualifier** | **isReadable** | **isWritable** | **isinvariant** | **isNotifyable** |
|---|---|---|---|---|---|
| activationStatus | M | T | T | F | T |

| **Attribute related to role** | | | | | |
|---|---|---|---|---|---|
| | | | | | |

### 1.3.4.3 Attribute constraints

None.

### 7.5 Attribute definitions

### 7.5.1 Attribute properties

| **Attribute Name** | **Documentation and Allowed Values** | **Properties** |
|---|---|---|
| sourceTrainedMLEntity Ref | It identifies the DN of the source trained MLEntity whose copy has been loaded from the ML entity repository to the inference function. | Type: DN (see 3GPP TS 32.156 [13]) |
| | | multiplicity: 1 |
| | | isOrdered: False |
| | allowedValues: DN | isUnique: True |
| | | defaultvalue: None |
| | | isNullable: True |
| activationStatus | It describes the activation status of an ML entity. allowedValues: ACTIVATED, DEACTIVATED. | Type: Enum |
| | | multiplicity: 1 |
| | | isOrdered: N/A |
| | | isUnique: N/A |
| | | defaultvalue: None |
| | | isNullable: False |
| NOTE: When the performancescore is to indicate the performance score for ML training, the data set is the training data set. When the performancescore is to indicate the performance score for ML validation, the data set is the validation data set. When the performancescore is to indicate the performance score for ML testing, the data set is the testing data set. | | |

### References

[1] 3GPP TR 21.905: "Vocabulary for 3GPP Specifications".
[2] 3GPP TS 28.104: "Management and orchestration; Management Data Analytics".
[3] 3GPP TS 23.288: "Architecture enhancements for 5G System (5GS) to support network data analytics services".
[4] 3GPP TS 28.552: "Management and orchestration; 5G performance measurements".
[5] 3GPP TS 32.425: "Telecommunication management; Performance Management (PM); Performance measurements Evolved Universal Terrestrial Radio Access Network (E-UTRAN)".
[6] 3GPP TS 28.554: "Management and orchestration; 5G end to end Key Performance Indicators (KPI)" .
[7] 3GPP TS 32.422: "Telecommunication management; Subscriber and equipment trace; Trace control and configuration management".
[8] 3GPP TS 32.423: "Telecommunication management; Subscriber and equipment trace; Trace data definition and management".
[9] 3GPP TS 28.405: "Telecommunication management; Quality of Experience (QoE) measurement collection; Control and configuration".
[10] 3GPP TS 28.406: "Telecommunication management; Quality of Experience (QoE) measurement collection; Information definition and transport".
[11] 3GPP TS 28.532: "Management and orchestration; Generic management services".
[12] 3GPP TS 28.622: "Telecommunication management; Generic Network Resource Model (NRM) Integration Reference Point (IRP); Information Service (IS)".
[13] 3GPP TS 32.156: "Telecommunication management; Fixed Mobile Convergence (FMC) Model repertoire".
[14] 3GPP TS 32.160: "Management and orchestration; Management service template".
[15] 3GPP TS 28.533: "Management and orchestration; Architecture framework".
[16] 3GPP TS 38.300: "NR; NR and NG-RAN Overall description; Stage-2".
[17] 3GPP TS 38.401: "NG-RAN; Architecture description".
[x] 3GPP TS 28.541: "Management and orchestration; 5G Network Resource Model (NRM); Stage 2 and stage 3".

### Systems and Implementations

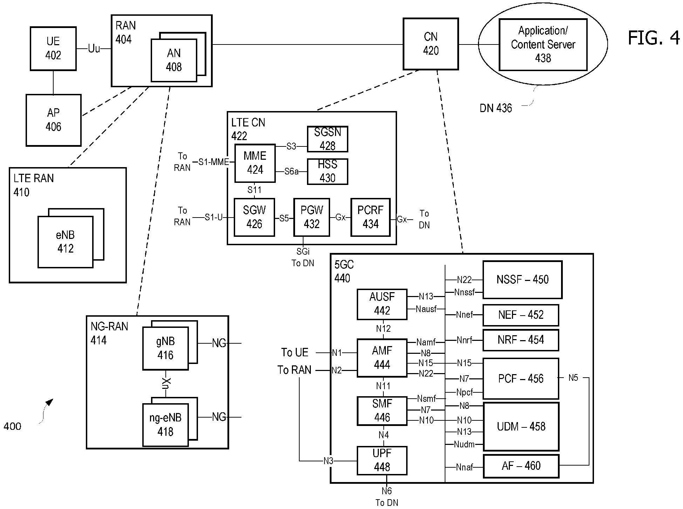

FIGs. 4-8 illustrate various systems, devices, and components that may implement aspects of disclosed embodiments.

FIG. 4 illustrates a network 400 in accordance with various embodiments. The network 400 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 400 may include a UE 402, which may include any mobile or non-mobile computing device designed to communicate with a RAN 404 via an over-the-air connection. The UE 402 may be communicatively coupled with the RAN 404 by a Uu interface. The UE 402 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 400 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 402 may additionally communicate with an AP 406 via an over-the-air connection. The AP 406 may manage a WLAN connection, which may serve to offload some/all network traffic from the RAN 404. The connection between the UE 402 and the AP 406 may be consistent with any IEEE 802.11 protocol, wherein the AP 406 could be a wireless fidelity (Wi-Fi^{®}) router. In some embodiments, the UE 402, RAN 404, and AP 406 may utilize cellular-WLAN aggregation (for example, LWA/LWIP). Cellular-WLAN aggregation may involve the UE 402 being configured by the RAN 404 to utilize both cellular radio resources and WLAN resources.

The RAN 404 may include one or more access nodes, for example, AN 408. AN 408 may terminate air-interface protocols for the UE 402 by providing access stratum protocols including RRC, PDCP, RLC, MAC, and L1 protocols. In this manner, the AN 408 may enable data/voice connectivity between CN 420 and the UE 402. In some embodiments, the AN 408 may be implemented in a discrete device or as one or more software entities running on server computers as part of, for example, a virtual network, which may be referred to as a CRAN or virtual baseband unit pool. The AN 408 be referred to as a BS, gNB, RAN node, eNB, ng-eNB, NodeB, RSU, TRxP, TRP, etc. The AN 408 may be a macrocell base station or a low power base station for providing femtocells, picocells or other like cells having smaller coverage areas, smaller user capacity, or higher bandwidth compared to macrocells.

In embodiments in which the RAN 404 includes a plurality of ANs, they may be coupled with one another via an X2 interface (if the RAN 404 is an LTE RAN) or an Xn interface (if the RAN 404 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 404 may each manage one or more cells, cell groups, component carriers, etc. to provide the UE 402 with an air interface for network access. The UE 402 may be simultaneously connected with a plurality of cells provided by the same or different ANs of the RAN 404. For example, the UE 402 and RAN 404 may use carrier aggregation to allow the UE 402 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 404 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 402 or AN 408 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 404 may be an LTE RAN 410 with eNBs, for example, eNB 412. The LTE RAN 410 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 404 may be an NG-RAN 414 with gNBs, for example, gNB 416, or ng-eNBs, for example, ng-eNB 418. The gNB 416 may connect with 5G-enabled UEs using a 5G NR interface. The gNB 416 may connect with a 5G core through an NG interface, which may include an N2 interface or an N3 interface. The ng-eNB 418 may also connect with the 5G core through an NG interface, but may connect with a UE via an LTE air interface. The gNB 416 and the ng-eNB 418 may connect with each other over an Xn interface.

In some embodiments, the NG interface may be split into two parts, an NG user plane (NG-U) interface, which carries traffic data between the nodes of the NG-RAN 414 and a UPF 448 (e.g., N3 interface), and an NG control plane (NG-C) interface, which is a signaling interface between the nodes of the NG-RANYX14 and an AMF 444 (e.g., N2 interface).

The NG-RAN 414 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 402 can be configured with multiple BWPs where each BWP configuration has a different SCS. When a BWP change is indicated to the UE 402, the SCS of the transmission is changed as well. Another use case example of BWP is related to power saving. In particular, multiple BWPs can be configured for the UE 402 with different amount of frequency resources (for example, PRBs) to support data transmission under different traffic loading scenarios. A BWP containing a smaller number of PRBs can be used for data transmission with small traffic load while allowing power saving at the UE 402 and in some cases at the gNB 416. A BWP containing a larger number of PRBs can be used for scenarios with higher traffic load.

The RAN 404 is communicatively coupled to CN 420 that includes network elements to provide various functions to support data and telecommunications services to customers/subscribers (for example, users of UE 402). The components of the CN 420 may be implemented in one physical node or separate physical nodes. In some embodiments, NFV may be utilized to virtualize any or all of the functions provided by the network elements of the CN 420 onto physical compute/storage resources in servers, switches, etc. A logical instantiation of the CN 420 may be referred to as a network slice, and a logical instantiation of a portion of the CN 420 may be referred to as a network sub-slice.

In some embodiments, the CN 420 may be an LTE CN 422, which may also be referred to as an EPC. The LTE CN 422 may include MME 424, SGW 426, SGSN 428, HSS 430, PGW 432, and PCRF 434 coupled with one another over interfaces (or "reference points") as shown. Functions of the elements of the LTE CN 422 may be briefly introduced as follows.

The MME 424 may implement mobility management functions to track a current location of the UE 402 to facilitate paging, bearer activation/deactivation, handovers, gateway selection, authentication, etc.

The SGW 426 may terminate an S1 interface toward the RAN and route data packets between the RAN and the LTE CN 422. The SGW 426 may be a local mobility anchor point for inter-RAN node handovers and also may provide an anchor for inter-3GPP mobility. Other responsibilities may include lawful intercept, charging, and some policy enforcement.

The SGSN 428 may track a location of the UE 402 and perform security functions and access control. In addition, the SGSN 428 may perform inter-EPC node signaling for mobility between different RAT networks; PDN and S-GW selection as specified by MME 424; MME selection for handovers; etc. The S3 reference point between the MME 424 and the SGSN 428 may enable user and bearer information exchange for inter-3GPP access network mobility in idle/active states.

The HSS 430 may include a database for network users, including subscription-related information to support the network entities' handling of communication sessions. The HSS 430 can provide support for routing/roaming, authentication, authorization, naming/addressing resolution, location dependencies, etc. An S6a reference point between the HSS 430 and the MME 424 may enable transfer of subscription and authentication data for authenticating/authorizing user access to the LTE CN 420.

The PGW 432 may terminate an SGi interface toward a data network (DN) 436 that may include an application/content server 438. The PGW 432 may route data packets between the LTE CN 422 and the data network 436. The PGW 432 may be coupled with the SGW 426 by an S5 reference point to facilitate user plane tunneling and tunnel management. The PGW 432 may further include a node for policy enforcement and charging data collection (for example, PCEF). Additionally, the SGi reference point between the PGW 432 and the data network 436 may be an operator external public, a private PDN, or an intra-operator packet data network, for example, for provision of IMS services. The PGW 432 may be coupled with a PCRF 434 via a Gx reference point.

The PCRF 434 is the policy and charging control element of the LTE CN 422. The PCRF 434 may be communicatively coupled to the app/content server 438 to determine appropriate QoS and charging parameters for service flows. The PCRF 432 may provision associated rules into a PCEF (via Gx reference point) with appropriate TFT and QCI.

In some embodiments, the CN 420 may be a 5GC 440. The 5GC 440 may include an AUSF 442, AMF 444, SMF 446, UPF 448, NSSF 450, NEF 452, NRF 454, PCF 456, UDM 458, and AF 460 coupled with one another over interfaces (or "reference points") as shown. Functions of the elements of the 5GC 440 may be briefly introduced as follows.

The AUSF 442 may store data for authentication of UE 402 and handle authentication-related functionality. The AUSF 442 may facilitate a common authentication framework for various access types. In addition to communicating with other elements of the 5GC 440 over reference points as shown, the AUSF 442 may exhibit an Nausf service-based interface.

The AMF 444 may allow other functions of the 5GC 440 to communicate with the UE 402 and the RAN 404 and to subscribe to notifications about mobility events with respect to the UE 402. The AMF 444 may be responsible for registration management (for example, for registering UE 402), connection management, reachability management, mobility management, lawful interception of AMF-related events, and access authentication and authorization. The AMF 444 may provide transport for SM messages between the UE 402 and the SMF 446, and act as a transparent proxy for routing SM messages. AMF 444 may also provide transport for SMS messages between UE 402 and an SMSF. AMF YX44 may interact with the AUSF 442 and the UE 402 to perform various security anchor and context management functions. Furthermore, AMF 444 may be a termination point of a RAN CP interface, which may include or be an N2 reference point between the RAN 404 and the AMF 444; and the AMF 444 may be a termination point ofNAS (N1) signaling, and perform NAS ciphering and integrity protection. AMF 444 may also support NAS signaling with the UE 402 over an N3 IWF interface.

The SMF 446 may be responsible for SM (for example, session establishment, tunnel management between UPF 448 and AN 408); UE IP address allocation and management (including optional authorization); selection and control of UP function; configuring traffic steering at UPF 448 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 444 over N2 to AN 408; and determining SSC mode of a session. SM may refer to management of a PDU session, and a PDU session or "session" may refer to a PDU connectivity service that provides or enables the exchange of PDUs between the UE 402 and the data network 436.

The UPF 448 may act as an anchor point for intra-RAT and inter-RAT mobility, an external PDU session point of interconnect to data network 436, and a branching point to support multi-homed PDU session. The UPF 448 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 448 may include an uplink classifier to support routing traffic flows to a data network.

The NSSF 450 may select a set of network slice instances serving the UE 402. The NSSF 450 may also determine allowed NSSAI and the mapping to the subscribed S-NSSAIs, if needed. The NSSF 450 may also determine the AMF set to be used to serve the UE 402, or a list of candidate AMFs based on a suitable configuration and possibly by querying the NRF 454. The selection of a set of network slice instances for the UE 402 may be triggered by the AMF 444 with which the UE 402 is registered by interacting with the NSSF 450, which may lead to a change of AMF. The NSSF 450 may interact with the AMF 444 via an N22 reference point; and may communicate with another NSSF in a visited network via an N31 reference point (not shown). Additionally, the NSSF 450 may exhibit an Nnssf service-based interface.

The NEF 452 may securely expose services and capabilities provided by 3GPP network functions for third party, internal exposure/re-exposure, AFs (e.g., AF 460), edge computing or fog computing systems, etc. In such embodiments, the NEF 452 may authenticate, authorize, or throttle the AFs. NEF 452 may also translate information exchanged with the AF 460 and information exchanged with internal network functions. For example, the NEF 452 may translate between an AF-Service-Identifier and an internal 5GC information. NEF 452 may also receive information from other NFs based on exposed capabilities of other NFs. This information may be stored at the NEF 452 as structured data, or at a data storage NF using standardized interfaces. The stored information can then be re-exposed by the NEF 452 to other NFs and AFs, or used for other purposes such as analytics. Additionally, the NEF 452 may exhibit an Nnef service-based interface.

The NRF 454 may support service discovery functions, receive NF discovery requests from NF instances, and provide the information of the discovered NF instances to the NF instances. NRF 454 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 454 may exhibit the Nnrf service-based interface.

The PCF 456 may provide policy rules to control plane functions to enforce them, and may also support unified policy framework to govern network behavior. The PCF 456 may also implement a front end to access subscription information relevant for policy decisions in a UDR of the UDM 458. In addition to communicating with functions over reference points as shown, the PCF 456 exhibit an Npcf service-based interface.

The UDM 458 may handle subscription-related information to support the network entities' handling of communication sessions, and may store subscription data of UE 402. For example, subscription data may be communicated via an N8 reference point between the UDM 458 and the AMF 444. The UDM 458 may include two parts, an application front end and a UDR. The UDR may store subscription data and policy data for the UDM 458 and the PCF 456, and/or structured data for exposure and application data (including PFDs for application detection, application request information for multiple UEs 402) for the NEF 452. The Nudr service-based interface may be exhibited by the UDR 221 to allow the UDM 458, PCF 456, and NEF 452 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 458 may exhibit the Nudm service-based interface.

The AF 460 may provide application influence on traffic routing, provide access to NEF, and interact with the policy framework for policy control.

In some embodiments, the 5GC 440 may enable edge computing by selecting operator/3^{rd} party services to be geographically close to a point that the UE 402 is attached to the network. This may reduce latency and load on the network. To provide edge-computing implementations, the 5GC 440 may select a UPF 448 close to the UE YX02 and execute traffic steering from the UPF 448 to data network 436 via the N6 interface. This may be based on the UE subscription data, UE location, and information provided by the AF 460. In this way, the AF 460 may influence UPF (re)selection and traffic routing. Based on operator deployment, when AF 460 is considered to be a trusted entity, the network operator may permit AF 460 to interact directly with relevant NFs. Additionally, the AF 460 may exhibit an Naf service-based interface.

The data network 436 may represent various network operator services, Internet access, or third party services that may be provided by one or more servers including, for example, application/content server 438.

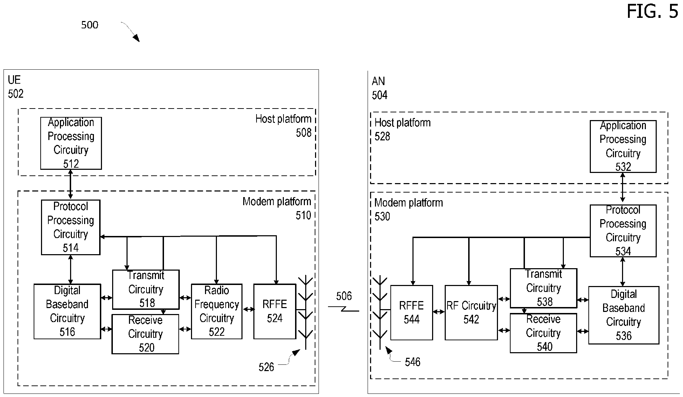

FIG. 5 schematically illustrates a wireless network 500 in accordance with various embodiments. The wireless network 500 may include a UE 502 in wireless communication with an AN 504. The UE 502 and AN 504 may be similar to, and substantially interchangeable with, like-named components described elsewhere herein.

The UE 502 may be communicatively coupled with the AN 504 via connection 506. The connection YY06 is illustrated as an air interface to enable communicative coupling, and can be consistent with cellular communications protocols such as an LTE protocol or a 5G NR protocol operating at mmWave or sub-6GHz frequencies.

The UE 502 may include a host platform 508 coupled with a modem platform 510. The host platform 508 may include application processing circuitry 512, which may be coupled with protocol processing circuitry 514 of the modem platform 510. The application processing circuitry 512 may run various applications for the UE 502 that source/sink application data. The application processing circuitry 512 may further implement one or more layer operations to transmit/receive application data to/from a data network. These layer operations may include transport (for example UDP) and Internet (for example, IP) operations

The protocol processing circuitry 514 may implement one or more of layer operations to facilitate transmission or reception of data over the connection 506. The layer operations implemented by the protocol processing circuitry 514 may include, for example, MAC, RLC, PDCP, RRC and NAS operations.

The modem platform 510 may further include digital baseband circuitry 516 that may implement one or more layer operations that are "below" layer operations performed by the protocol processing circuitry 514 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 510 may further include transmit circuitry 518, receive circuitry 520, RF circuitry 522, and RF front end (RFFE) 524, which may include or connect to one or more antenna panels 526. Briefly, the transmit circuitry 518 may include a digital-to-analog converter, mixer, intermediate frequency (IF) components, etc.; the receive circuitry 520 may include an analog-to-digital converter, mixer, IF components, etc.; the RF circuitry 522 may include a low-noise amplifier, a power amplifier, power tracking components, etc.; RFFE 524 may include filters (for example, surface/bulk acoustic wave filters), switches, antenna tuners, beamforming components (for example, phase-array antenna components), etc. The selection and arrangement of the components of the transmit circuitry 518, receive circuitry 520, RF circuitry 522, RFFE 524, and antenna panels 526 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 514 may include one or more instances of control circuitry (not shown) to provide control functions for the transmit/receive components.

A UE reception may be established by and via the antenna panels 526, RFFE 524, RF circuitry 522, receive circuitry 520, digital baseband circuitry 516, and protocol processing circuitry 514. In some embodiments, the antenna panels 526 may receive a transmission from the AN 504 by receive-beamforming signals received by a plurality of antennas/antenna elements of the one or more antenna panels 526.

A UE transmission may be established by and via the protocol processing circuitry 514, digital baseband circuitry 516, transmit circuitry 518, RF circuitry 522, RFFE 524, and antenna panels 526. In some embodiments, the transmit components of the UE 504 may apply a spatial filter to the data to be transmitted to form a transmit beam emitted by the antenna elements of the antenna panels 526.

Similar to the UE 502, the AN 504 may include a host platform 528 coupled with a modem platform 530. The host platform 528 may include application processing circuitry 532 coupled with protocol processing circuitry 534 of the modem platform 530. The modem platform may further include digital baseband circuitry 536, transmit circuitry 538, receive circuitry 540, RF circuitry 542, RFFE circuitry 544, and antenna panels 546. The components of the AN 504 may be similar to and substantially interchangeable with like-named components of the UE 502. In addition to performing data transmission/reception as described above, the components of the AN 508 may perform various logical functions that include, for example, RNC functions such as radio bearer management, uplink and downlink dynamic radio resource management, and data packet scheduling.

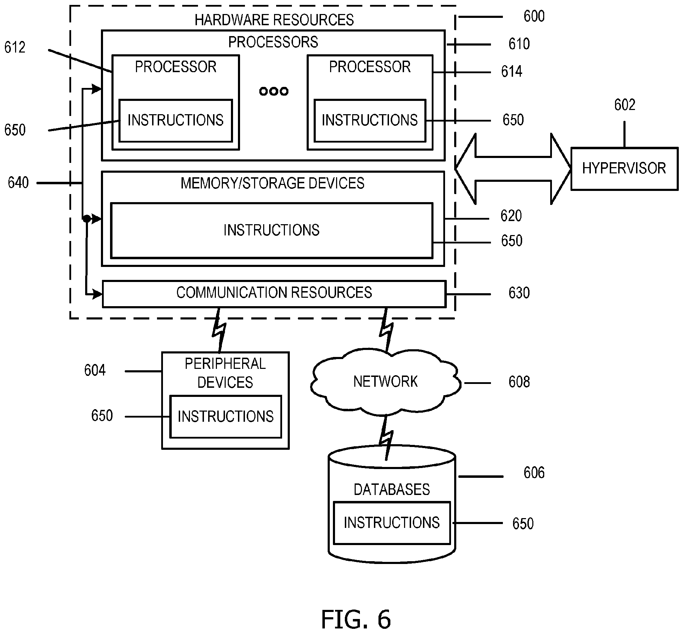

FIG. 6 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 6 shows a diagrammatic representation of hardware resources 600 including one or more processors (or processor cores) 610, one or more memory/storage devices 620, and one or more communication resources 630, each of which may be communicatively coupled via a bus 640 or other interface circuitry. For embodiments where node virtualization (e.g., NFV) is utilized, a hypervisor 602 may be executed to provide an execution environment for one or more network slices/sub-slices to utilize the hardware resources 600.

The processors 610 may include, for example, a processor 612 and a processor 614. The processors 610 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radiofrequency integrated circuit (RFIC), another processor (including those discussed herein), or any suitable combination thereof.

The memory/storage devices 620 may include main memory, disk storage, or any suitable combination thereof. The memory/storage devices 620 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 630 may include interconnection or network interface controllers, components, or other suitable devices to communicate with one or more peripheral devices 604 or one or more databases 606 or other network elements via a network 608. For example, the communication resources 630 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 650 may comprise software, a program, an application, an applet, an app, or other executable code for causing at least any of the processors 610 to perform any one or more of the methodologies discussed herein. The instructions 650 may reside, completely or partially, within at least one of the processors 610 (e.g., within the processor's cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

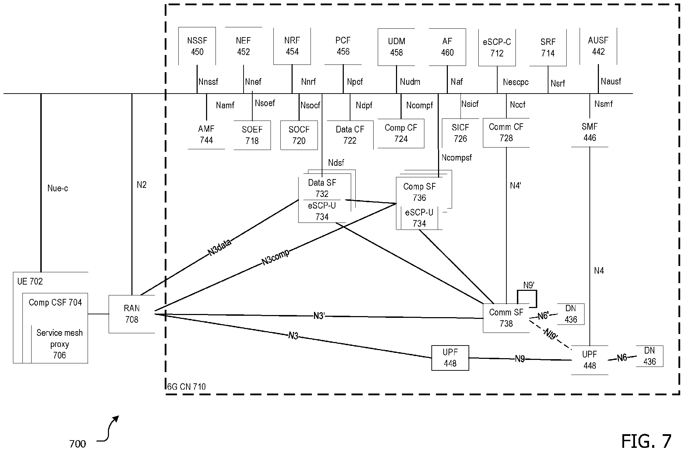

FIG. 7 illustrates a network 700 in accordance with various embodiments. The network 700 may operate in a matter consistent with 3GPP technical specifications or technical reports for 6G systems. In some embodiments, the network 700 may operate concurrently with network 400. For example, in some embodiments, the network 700 may share one or more frequency or bandwidth resources with network 400. As one specific example, a UE (e.g., UE 702) may be configured to operate in both network 700 and network 400. Such configuration may be based on a UE including circuitry configured for communication with frequency and bandwidth resources of both networks 400 and 700. In general, several elements of network 700 may share one or more characteristics with elements of network 400. For the sake of brevity and clarity, such elements may not be repeated in the description of network 700.

The network 700 may include a UE 702, which may include any mobile or non-mobile computing device designed to communicate with a RAN 708 via an over-the-air connection. The UE 702 may be similar to, for example, UE 402. The UE 702 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in FIG. 7, in some embodiments the network 700 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in FIG. 7, the UE 702 may be communicatively coupled with an AP such as AP 406 as described with respect to FIG. 4. Additionally, although not specifically shown in FIG. 7, in some embodiments the RAN 708 may include one or more ANss such as AN 408 as described with respect to FIG. 4. The RAN 708 and/or the AN of the RAN 708 may be referred to as a base station (BS), a RAN node, or using some other term or name.

The UE 702 and the RAN 708 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 708 may allow for communication between the UE 702 and a 6G core network (CN) 710. Specifically, the RAN 708 may facilitate the transmission and reception of data between the UE 702 and the 6G CN 710. The 6G CN 710 may include various functions such as NSSF 450, NEF 452, NRF 454, PCF 456, UDM 458, AF 460, SMF 446, and AUSF 442. The 6G CN 710 may additional include UPF 448 and DN 436 as shown in FIG. 7.

Additionally, the RAN 708 may include various additional functions that are in addition to, or alternative to, functions of a legacy cellular network such as a 4G or 5G network. Two such functions may include a Compute Control Function (Comp CF) 724 and a Compute Service Function (Comp SF) 736. The Comp CF 724 and the Comp SF 736 may be parts or functions of the Computing Service Plane. Comp CF 724 may be a control plane function that provides functionalities such as management of the Comp SF 736, computing task context generation and management (e.g., create, read, modify, delete), interaction with the underlying computing infrastructure for computing resource management, etc.. Comp SF 736 may be a user plane function that serves as the gateway to interface computing service users (such as UE 702) and computing nodes behind a Comp SF instance. Some functionalities of the Comp SF 736 may include: parse computing service data received from users to compute tasks executable by computing nodes; hold service mesh ingress gateway or service API gateway; service and charging policies enforcement; performance monitoring and telemetry collection, etc. In some embodiments, a Comp SF 736 instance may serve as the user plane gateway for a cluster of computing nodes. A Comp CF 724 instance may control one or more Comp SF 736 instances.

Two other such functions may include a Communication Control Function (Comm CF) 728 and a Communication Service Function (Comm SF) 738, which may be parts of the Communication Service Plane. The Comm CF 728 may be the control plane function for managing the Comm SF 738, communication sessions creation/configuration/releasing, and managing communication session context. The Comm SF 738 may be a user plane function for data transport. Comm CF 728 and Comm SF 738 may be considered as upgrades of SMF 446 and UPF 448, which were described with respect to a 5G system in FIG. 4. The upgrades provided by the Comm CF 728 and the Comm SF 738 may enable service-aware transport. For legacy (e.g., 4G or 5G) data transport, SMF 446 and UPF 448 may still be used.

Two other such functions may include a Data Control Function (Data CF) 722 and Data Service Function (Data SF) 732 may be parts of the Data Service Plane. Data CF 722 may be a control plane function and provides functionalities such as Data SF 732 management, Data service creation/configuration/releasing, Data service context management, etc. Data SF 732 may be a user plane function and serve as the gateway between data service users (such as UE 702 and the various functions of the 6G CN 710) and data service endpoints behind the gateway. Specific functionalities may include include: parse data service user data and forward to corresponding data service endpoints, generate charging data, report data service status.

Another such function may be the Service Orchestration and Chaining Function (SOCF) 720, which may discover, orchestrate and chain up communication/computing/data services provided by functions in the network. Upon receiving service requests from users, SOCF 720 may interact with one or more of Comp CF 724, Comm CF 728, and Data CF 722 to identify Comp SF 736, Comm SF 738, and Data SF 732 instances, configure service resources, and generate the service chain, which could contain multiple Comp SF 736, Comm SF 738, and Data SF 732 instances and their associated computing endpoints. Workload processing and data movement may then be conducted within the generated service chain. The SOCF 720 may also responsible for maintaining, updating, and releasing a created service chain.

Another such function may be the service registration function (SRF) 714, which may act as a registry for system services provided in the user plane such as services provided by service endpoints behind Comp SF 736 and Data SF 732 gateways and services provided by the UE 702. The SRF 714 may be considered a counterpart of NRF 454, which may act as the registry for network functions.

Other such functions may include an evolved service communication proxy (eSCP) and service infrastructure control function (SICF) 726, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 712 and eSCP-U 734, for control plane service communication proxy and user plane service communication proxy, respectively. The SICF 726 may control and configure eCSP instances in terms of service traffic routing policies, access rules, load balancing configurations, performance monitoring, etc.

Another such function is the AMF 744. The AMF 744 may be similar to 444, but with additional functionality. Specifically, the AMF 744 may include potential functional repartition, such as move the message forwarding functionality from the AMF 744 to the RAN 708.

Another such function is the service orchestration exposure function (SOEF) 718. The SOEF may be configured to expose service orchestration and chaining services to external users such as applications.

The UE 702 may include an additional function that is referred to as a computing client service function (comp CSF) 704. The comp CSF 704 may have both the control plane functionalities and user plane functionalities, and may interact with corresponding network side functions such as SOCF 720, Comp CF 724, Comp SF 736, Data CF 722, and/or Data SF 732 for service discovery, request/response, compute task workload exchange, etc. The Comp CSF 704 may also work with network side functions to decide on whether a computing task should be run on the UE 702, the RAN 708, and/or an element of the 6G CN 710.

The UE 702 and/or the Comp CSF 704 may include a service mesh proxy 706. The service mesh proxy 706 may act as a proxy for service-to-service communication in the user plane. Capabilities of the service mesh proxy 706 may include one or more of addressing, security, load balancing, etc.

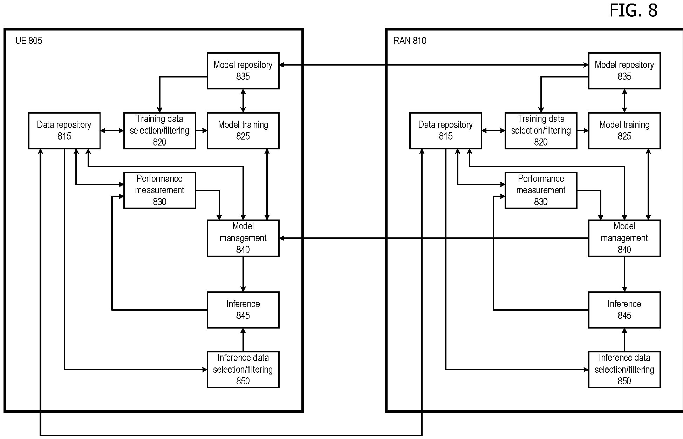

FIG. 8 illustrates a simplified block diagram of artificial (AI)-assisted communication between a UE 805 and a RAN 810, in accordance with various embodiments. More specifically, as described in further detail below, AI/machine learning (ML) models may be used or leveraged to facilitate over-the-air communication between UE 805 and RAN 810.

One or both of the UE 805 and the RAN 810 may operate in a matter consistent with 3GPP technical specifications or technical reports for 6G systems. In some embodiments, the wireless cellular communication between the UE 805 and the RAN 810 may be part of, or operate concurrently with, networks 700, 400, and/or some other network described herein.

The UE 805 may be similar to, and share one or more features with, UE 702, UE 402, and/or some other UE described herein. The UE 805 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc. The RAN 810 may be similar to, and share one or more features with, RAN 414, RAN 708, and/or some other RAN described herein.

As may be seen in FIG. 8, the AI-related elements of UE 805 may be similar to the AI-related elements of RAN 810. For the sake of discussion herein, description of the various elements will be provided from the point of view of the UE 805, however it will be understood that such discussion or description will apply to equally named/numbered elements of RAN 810, unless explicitly stated otherwise.

As previously noted, the UE 805 may include various elements or functions that are related to AI/ML. Such elements may be implemented as hardware, software, firmware, and/or some combination thereof. In embodiments, one or more of the elements may be implemented as part of the same hardware (e.g., chip or multi-processor chip), software (e.g., a computing program), or firmware as another element.

One such element may be a data repository 815. The data repository 815 may be responsible for data collection and storage. Specifically, the data repository 815 may collect and store RAN configuration parameters, measurement data, performance key performance indicators (KPIs), model performance metrics, etc., for model training, update, and inference. More generally, collected data is stored into the repository. Stored data can be discovered and extracted by other elements from the data repository 815. For example, as may be seen, the inference data selection/filter element 850 may retrieve data from the data repository 815. In various embodiments, the UE 805 may be configured to discover and request data from the data repository 810 in the RAN, and vice versa. More generally, the data repository 815 of the UE 805 may be communicatively coupled with the data repository 815 of the RAN 810 such that the respective data repositories of the UE and the RAN may share collected data with one another.

Another such element may be a training data selection/filtering functional block 820. The training data selection/filter functional block 820 may be configured to generate training, validation, and testing datasets for model training. Training data may be extracted from the data repository 815. Data may be selected/filtered based on the specific AI/ML model to be trained. Data may optionally be transformed/augmented/pre-processed (e.g., normalized) before being loaded into datasets. The training data selection/filter functional block 820 may label data in datasets for supervised learning. The produced datasets may then be fed into model training the model training functional block 825.

As noted above, another such element may be the model training functional block 825. This functional block may be responsible for training and updating(re-training) AI/ML models. The selected model may be trained using the fed-in datasets (including training, validation, testing) from the training data selection/filtering functional block. The model training functional block 825 may produce trained and tested AI/ML models which are ready for deployment. The produced trained and tested models can be stored in a model repository 835.

The model repository 835 may be responsible for AI/ML models' (both trained and un-trained) storage and exposure. Trained/updated model(s) may be stored into the model repository 835. Model and model parameters may be discovered and requested by other functional blocks (e.g., the training data selection/filter functional block 820 and/or the model training functional block 825). In some embodiments, the UE 805 may discover and request AI/ML models from the model repository 835 of the RAN 810. Similarly, the RAN 810 may be able to discover and/or request AI/ML models from the model repository 835 of the UE 805. In some embodiments, the RAN 810 may configure models and/or model parameters in the model repository 835 of the UE 805.

Another such element may be a model management functional block 840. The model management functional block 840 may be responsible for management of the AI/ML model produced by the model training functional block 825. Such management functions may include deployment of a trained model, monitoring model performance, etc. In model deployment, the model management functional block 840 may allocate and schedule hardware and/or software resources for inference, based on received trained and tested models. As used herein, "inference" refers to the process of using trained AI/ML model(s) to generate data analytics, actions, policies, etc. based on input inference data. In performance monitoring, based on wireless performance KPIs and model performance metrics, the model management functional block 840 may decide to terminate the running model, start model re-training, select another model, etc. In embodiments, the model management functional block 840 of the RAN 810 may be able to configure model management policies in the UE 805 as shown.

Another such element may be an inference data selection/filtering functional block 850. The inference data selection/filter functional block 850 may be responsible for generating datasets for model inference at the inference functional block 845, as described below. Specifically, inference data may be extracted from the data repository 815. The inference data selection/filter functional block 850 may select and/or filter the data based on the deployed AI/ML model. Data may be transformed/augmented/pre-processed following the same transformation/augmentation/pre-processing as those in training data selection/filtering as described with respect to functional block 820. The produced inference dataset may be fed into the inference functional block 845.

Another such element may be the inference functional block 845. The inference functional block 845 may be responsible for executing inference as described above. Specifically, the inference functional block 845 may consume the inference dataset provided by the inference data selection/filtering functional block 850, and generate one or more outcomes. Such outcomes may be or include data analytics, actions, policies, etc. The outcome(s) may be provided to the performance measurement functional block 830.

The performance measurement functional block 830 may be configured to measure model performance metrics (e.g., accuracy, model bias, run-time latency, etc.) of deployed and executing models based on the inference outcome(s) for monitoring purpose. Model performance data may be stored in the data repository 815.

### Example Procedures

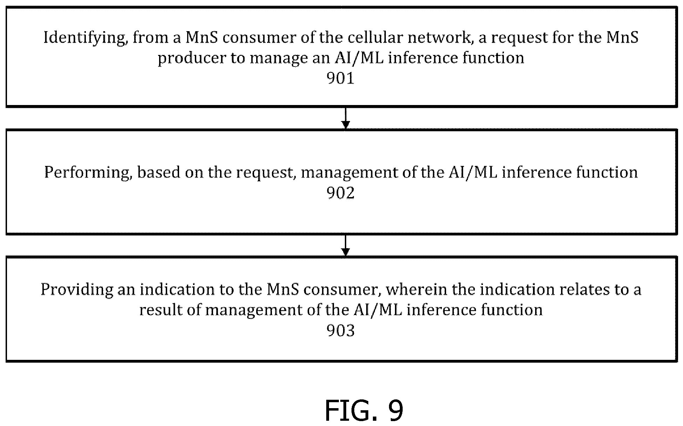

In some embodiments, the electronic device(s), network(s), system(s), chip(s) or component(s), or portions or implementations thereof, of Figures 4-8, or some other figure herein, may be configured to perform one or more processes, techniques, or methods as described herein, or portions thereof. One such process is depicted in FIG. 9. The process may include or relate to a method to be performed by an electronic device that includes or implements a management service (MnS) producer of a cellular network. The process may include identifying, at 901 from a MnS consumer of the cellular network, a request for the MnS producer to manage an artificial intelligence/machine learning (AI/ML) inference function; performing, at 902 based on the request, management of the AI/ML inference function; and providing, at 903, an indication to the MnS consumer, wherein the indication relates to a result of management of the AI/ML inference function.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include an MnS producer configured to support management of AI/ML inference function, comprising: receiving a request from a consumer to manage an AI/ML inference function; managing the AI/ML inference function; responding to the MnS consumer to indicate the result of the AI/ML inference function management.

Example 2 may include the apparatus of example 1 or some other example herein, wherein the AI/ML inference function is NWDAF, MDA Function, AI/ML based distributed Energy Saving function, AI/ML based distributed Mobility Robustness Optimization function, or AI/ML based distributed Mobility Load Balancing function.

Example 3 may include the apparatus of examples 1 and 2 or some other example herein, wherein the AI/ML inference function is presented by an MOI (Managed Object Instance).

Example 4 may include the apparatus of examples 1 to 3 or some other example herein, wherein the management of AI/ML inference function is creating an MOI of the inference function, modifying the MOI of the inference function, deleting the MOI of the inference function, or subscribing to the notification of the MOI changes of the inference function.

Example 5 may include the apparatus of examples 1 and 4 or some other example herein, wherein the management of AI/ML inference function is further comprised of activating and deactivating the AI/ML inference function, and getting the activation status of the AI/ML inference function via an attribute of the MOI.

Example 6 may include the apparatus of examples 1 to 5 or some other example herein, wherein MOI of the AI/ML inference function contains one or more MOI(s) of ML entities.

Example 7 may include the apparatus of example 6 or some other example herein, wherein MOI of the ML entity contained by the MOI of the AI/ML inference function represents the ML entity loaded to the AI/ML inference function.

Example 8 may include the apparatus of example 7 or some other example herein, wherein the first MOI of the ML entity contained by the MOI of the AI/ML inference function is associated with a second MOI of the ML entity.

Example 9 may include the apparatus of example 8 or some other example herein, wherein second MOI of the ML entity represents the source ML entity whose copy has been loaded from the ML entity repository to the AI/ML inference function.

Example 10 may include the apparatus of examples 2 to 9 or some other example herein, wherein IOC (Information Object Class) representing the AI/ML inference function is inherited from ManagedFunction IOC.

Example 11 includes a method to be performed by an electronic device that includes or implements a management service (MnS) producer of a cellular network, wherein the method comprises: identifying, from a MnS consumer of the cellular network, a request for the MnS producer to manage an artificial intelligence/machine learning (AI/ML) inference function; performing, based on the request, management of the AI/ML inference function; and providing an indication to the MnS consumer, wherein the indication relates to a result of management of the AI/ML inference function.

Example 12 includes the method of example 11, and/or some other example herein, wherein the AI/ML inference function is related to a network data analytics function (NWDAF), a management data analytics (MDA) function, or an AI/ML based function.

Example 13 includes the method of any of examples 11-12, and/or some other example herein, wherein management of the AI/ML inference function includes: creating a managed object instance (MOI) of the inference function; modifying the MOI; deleting the MOI; or subscribing to a notification related to MOI changes of the inference function.

Example Z01 may include an apparatus comprising means to perform one or more elements of a method described in or related to any of examples 1-13, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-13, or any other method or process described herein.

Example Z03 may include an apparatus comprising logic, modules, or circuitry to perform one or more elements of a method described in or related to any of examples 1-13, or any other method or process described herein.

Example Z04 may include a method, technique, or process as described in or related to any of examples 1-13, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-13, or portions thereof.

Example Z06 may include a signal as described in or related to any of examples 1-13, or portions or parts thereof.

Example Z07 may include a datagram, packet, frame, segment, protocol data unit (PDU), or message as described in or related to any of examples 1-13, or portions or parts thereof, or otherwise described in the present disclosure.

Example Z08 may include a signal encoded with data as described in or related to any of examples 1-13, or portions or parts thereof, or otherwise described in the present disclosure.

Example Z09 may include a signal encoded with a datagram, packet, frame, segment, protocol data unit (PDU), or message as described in or related to any of examples 1-13, or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-13, or portions thereof.

Example Z11 may include a computer program comprising instructions, wherein execution of the program by a processing element is to cause the processing element to carry out the method, techniques, or process as described in or related to any of examples 1-13, or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations:

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

In particular: The term "3GPP" may refer to Third Generation Partnership Project. The term "4G" may refer to Fourth Generation. The term "5G" may refer to Fifth Generation. The term "5GC" may refer to 5G Core network. The term "ACK" may refer to Acknowledgement. The term "AF" may refer to Application Function. The term "AM" may refer to Acknowledged Mode. The term "AMF" may refer to Access and Mobility Function. The term "AN" may refer to Access Network. The term "AP" may refer to Application Protocol, Antenna Port, or Access Point. The term "API" may refer to Application Programming Interface. The term "ARQ" may refer to Automatic Repeat Request. The term "AS" may refer to Access Stratum. The term "AUSF" may refer to Authentication Server Function.The term "BCH" may refer to Broadcast Channel. The term "BER" may refer to Bit Error Ratio. The term "BS" may refer to Base Station. The term "BW" may refer to Bandwidth. The term "BWP" may refer to Bandwidth Part. The term "CA" may refer to Carrier Aggregation or Certification Authority. The term "CC" may refer to Component Carrier, Country Code, or Cryptographic Checksum. The term "CCE" may refer to Control Channel Element. The term "CE" may refer to Coverage Enhancement. The term "CG" may refer to Cell Group. The term "CI" may refer to Cell Identity. The term "CID" may refer to Cell-ID (e.g., positioning method). The term "CIR" may refer to Carrier to Interference . The term "CK" may refer to Cipher Key. The term "CM" may refer to Connection Management or Conditional Mandatory. The term "CO" may refer to Conditional Optional. The term "CoMP" may refer to Coordinated Multi-Point. The term "CP" may refer to Control Plane, Cyclic Prefix, or Connection Point. The term "CPU" may refer to CSI processing unit or Central Processing Unit. The term "CRAN" may refer to Cloud Radio Access Network or Cloud RAN. The term "CRI" may refer to Channel-State Information Resource Indicator or CSI-RS Resource Indicator. The term "CS" may refer to Circuit Switched. The term "CSI" may refer to Channel-State Information. The term "CSI-RS" may refer to CSI Reference Signal. The term "CTS" may refer to Clear-to-Send.

The term "D2D" may refer to Device-to-Device. The term "DC" may refer to Dual Connectivity or Direct Current. The term "DF" may refer to Deployment Flavour. The term "DL" may refer to Downlink. The term "DN" may refer to Data network. The term "ED" may refer to Energy Detection. The term "EDGE" may refer to Enhanced Datarates for GSM Evolution (GSM Evolution). The term "EIR" may refer to Equipment Identity Register. The term "eLAA" may refer to enhanced Licensed Assisted Access or enhanced LAA. The term "EM" may refer to Element Manager. The term "EMS" may refer to Element Management . The term "eNB" may refer to evolved NodeB, E-UTRAN Node B. The term "EPC" may refer to Evolved Packet Core. The term "EPRE" may refer to Energy per resource element. The term "E-UTRA" may refer to Evolved UTRA. The term "E-UTRAN" may refer to Evolved UTRAN. The term "FDM" may refer to Frequency Division Multiplex. The term "FDMA" may refer to Frequency Division Multiplex Access. The term "FE" may refer to Front End. The term "FEC" may refer to Forward Error Correction.The term "feLAA" may refer to further enhanced Licensed Assisted Access, enhanced LAA. The term "FPGA" may refer to Field-Programmable Gate Array. The term "FR" may refer to Frequency Range. The term "gNB" may refer to Next Generation NodeB. The term "GSM" may refer to Global System for Mobile Communication or Groupe Spécial Mobile.

The term "HARQ" may refer to Hybrid ARQ, Hybrid Automatic Repeat Request. The term "HN" may refer to Home Network. The term "HSS" may refer to Home Subscriber Server. The term "IAB" may refer to Integrated Access and Backhaul. The term "ID" may refer to Identity, identifier. The term "IE" may refer to Information element. The term "IBE" may refer to In-Band Emission. The term "IEEE" may refer to Institute of Electrical and Electronics Engineers. The term "IF" may refer to Infrastructure. The term "IM" may refer to Interference Measurement, Intermodulation, or IP Multimedia. The term "IMS" may refer to IP Multimedia Subsystem. The term "IoT" may refer to Internet of Things. The term "IP" may refer to Internet Protocol. The term "IR" may refer to Infrared. The term "IRP" may refer to Integration Reference Point. The term "ISO" may refer to International Organisation for Standardisation. The term "ISP" may refer to Internet Service Provider. The term "IWF" may refer to Interworking-Function. The term "Ki" may refer to Individual subscriber authentication key. The term "KPI" may refer to Key Performance Indicator. The term "L1" may refer to Layer 1 (physical layer). The term "LAA" may refer to Licensed Assisted Access. The term "LAN" may refer to Local Area Network. The term "LBT" may refer to Listen Before Talk. The term "LI" may refer to Layer Indicator. The term "LTE" may refer to Long Term Evolution. The term "LWA" may refer to LTE-WLAN aggregation. The term "LWIP" may refer to LTE/WLAN Radio Level Integration with IPSec Tunnel. The term "LTE" may refer to Long Term Evolution. The term "M2M" may refer to Machine-to-Machine. The term "MAC" may refer to Medium Access Control in protocol layering context or may refer to Message authentication code in security/encryption context. The term "MCG" may refer to Master Cell Group. The term "MDAF" may refer to Management Data Analytics Function. The term "ME" may refer to Mobile Equipment. The term "MER " may refer to Message Error Ratio. The term "MM" may refer to Mobility Management. The term "MME" may refer to Mobility Management Entity. The term "MN" may refer to Master Node.

The term "MO" may refer to Measurement Object or Mobile Originated. The term "MS" may refer to Mobile Station. The term "MT" may refer to Mobile Terminated, Mobile Termination. The term "MTC" may refer to Machine-Type Communications. The term "NAS" may refer to Non-Access Stratum or Non-Access Stratum Layer. The term "NEC" may refer to Network Capability Exposure. The term "NEF" may refer to Network Exposure Function. The term "NF" may refer to Network Function. The term "NFV" may refer to Network Functions Virtualization. The term "NFVI" may refer to NFV Infrastructure. The term "NG" may refer to Next Generation, Next Gen. The term "NM" may refer to Network Manager. The term "NR" may refer to New Radio, Neighbour Relation. The term "NRF" may refer to NF Repository Function. The term "NS" may refer to Network Service. The term "NSA" may refer to Non-Standalone operation mode. The term "NSSAI" may refer to Network Slice Selection Assistance Information. The term "NSSF" may refer to Network Slice Selection Function. The term "NW" may refer to Network. The term "NWDAF" may refer to Network Data Analytics Function. The term "OFDM" may refer to Orthogonal Frequency Multiplexing. The term "OSI" may refer to Other System Information. The term "OSS" may refer to Operations Support System. The term "OTA" may refer to over-the-air.

The term "PAR" may refer to Peak to Average Ratio. The term "PBCH" may refer to Physical Broadcast Channel. The term "PC" may refer to Power Control, Personal Computer. The term "PCell" may refer to Primary Cell. The term "PCEF" may refer to Policy and Charging Function. The term "PCF" may refer to Policy Control Function. The term "PCRF" may refer to Policy Control and Charging Function. The term "PDCP" may refer to Packet Data Convergence Protocol. The term "PDCCH" may refer to Physical Downlink Control Channel. The term "PDN" may refer to Packet Data Network or Public Data Network. The term "PDSCH" may refer to Physical Downlink Shared Channel. The term "PDU" may refer to Protocol Data Unit. The term "PFD" may refer to Packet Flow Description. The term "PHY" may refer to Physical layer. The term "PIN" may refer to Personal Identification Number. The term "PM" may refer to Performance Measurement. The term "PRB" may refer to Physical resource block. The term "PS" may refer to Packet Services. The term "PSBCH" may refer to Physical Sidelink Broadcast Channel. The term "PSDCH" may refer to Physical Sidelink Downlink Channel. The term "PSCCH" may refer to Physical Sidelink Control Channel. The term "PSSCH" may refer to Physical Sidelink Shared Channel. The term "PSCell" may refer to Primary SCell. The term "PSS" may refer to Primary Synchronization Signal. The term "QCI" may refer to QoS class of identifier. The term "QoS" may refer to Quality of Service. The term "RAB" may refer to Radio Access Bearer, Random Access Burst. The term "RAN" may refer to Radio Access Network. The term "RAND" may refer to RANDom number (used for authentication). The term "RAR" may refer to Random Access Response. The term "RAT" may refer to Radio Access Technology. The term "RB" may refer to Resource block, Radio Bearer. The term "REG" may refer to Resource Element Group. The term "Rel" may refer to Release. The term "REQ" may refer to REQuest. The term "RF" may refer to Radio Frequency. The term "RI" may refer to Rank Indicator. The term "RIV" may refer to Resource indicator value. The term "RL" may refer to Radio Link. The term "RLC" may refer to Radio Link Control, Radio Link Control layer. The term "RM" may refer to Registration Management. The term "RN" may refer to Relay Node. The term "RNC" may refer to Radio Network Controller. The term "RRC" may refer to Radio Resource Control, RRC layer. The term "RS" may refer to Reference Signal. The term "RSU" may refer to Road Side Unit. The term "RTP" may refer to Real Time Protocol. The term "RTS" may refer to Ready-To-Send. The term "Rx" may refer to Reception, Receiving, .

The term "S-GW" may refer to Serving Gateway. The term "SA" may refer to Standalone operation mode. The term "SCC" may refer to Secondary Component. The term "SCell" may refer to Secondary Cell . The term "SC-FDMA" may refer to Single Carrier Frequency . The term "SCG" may refer to Secondary Cell Group. The term "SCS" may refer to Subcarrier Spacing. The term "SGSN" may refer to Serving GPRS SupportNode. The term "S-GW" may refer to Serving Gateway. The term "SI" may refer to System Information. The term "SIB" may refer to System Information Block. The term "SIM" may refer to Subscriber Identity Module. The term "SL" may refer to Sidelink. The term "SLA" may refer to Service Level Agreement. The term "SM" may refer to Session Management. The term "SMF" may refer to Session Management Function. The term "SMS" may refer to Short Message Service. The term "SMSF" may refer to SMS Function. The term "SMTC" may refer to SSB-based Measurement Timing Configuration. The term "SN" may refer to Secondary Node, Sequence Number. The term "SoC" may refer to System on Chip. The term "SON" may refer to Self-Organizing Network. The term "SPS" may refer to Semi-Persistent Scheduling. The term "SR" may refer to Scheduling Request. The term "SS" may refer to Synchronization Signal. The term "SSB" may refer to Synchronization Signal Block. The term "SS/PBCH " may refer to SS/PBCH Block. The term "SSC" may refer to Session and Service Continuity. The term "SSS" may refer to Secondary Synchronization Signal. The term "SUL" may refer to Supplementary Uplink. The term "TA" may refer to Timing Advance, Tracking Area. The term "TAC" may refer to Tracking Area Code. The term "TAG" may refer to Timing Advance Group. The term "TB" may refer to Transport Block. The term "TDM" may refer to Time Division Multiplexing. The term "TE" may refer to Terminal Equipment. The term "TFT" may refer to Traffic Flow Template. The term "TR" may refer to Technical Report. The term "TRS" may refer to Tracking Reference Signal. The term "TRx" may refer to Transceiver. The term "TS" may refer to Technical Specifications, Technical Standard. The term "TTI" may refer to Transmission Time Interval.

The term "UCI" may refer to Uplink Control Information. The term "UE" may refer to User Equipment. The term "UDM" may refer to Unified Data Management. The term "UDP" may refer to User Datagram Protocol. The term "UL" may refer to Uplink. The term "UM" may refer to Unacknowledged Mode. The term "UP" may refer to User Plane. The term "UPF" may refer to User Plane Function. The term "URI" may refer to Uniform Resource Identifier. The term "USB" may refer to Universal Serial Bus. The term "USS" may refer to UE-specific search space. The term "UTRA" may refer to UMTS Terrestrial Radio Access. The term "UTRAN" may refer to Universal Terrestrial Radio Access Network. The term "V2X" may refer to Vehicle-to-everything. The term "VNF" may refer to Virtualized Network Function. The term "WLAN" may refer to Wireless Local Area Network.

For the purposes of the present document, the following terms and definitions are applicable to the examples and embodiments discussed herein.

The term "application" may refer to a complete and deployable package, environment to achieve a certain function in an operational environment. The term "AI/ML application" or the like may be an application that contains some AI/ML models and application-level descriptions.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry"

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "machine learning model," "ML model," or the like may also refer to ML methods and concepts used by an ML-assisted solution. An "ML-assisted solution" is a solution that addresses a specific use case using ML algorithms during operation. ML models include supervised learning (e.g., linear regression, k-nearest neighbor (KNN), descision tree algorithms, support machine vectors, Bayesian algorithm, ensemble algorithms, etc.) unsupervised learning (e.g., K-means clustering, principle component analysis (PCA), etc.), reinforcement learning (e.g., Q-learning, multi-armed bandit learning, deep RL, etc.), neural networks, and the like. Depending on the implementation a specific ML model could have many sub-models as components and the ML model may train all sub-models together. Separately trained ML models can also be chained together in an ML pipeline during inference. An "ML pipeline" is a set of functionalities, functions, or functional entities specific for an ML-assisted solution; an ML pipeline may include one or several data sources in a data pipeline, a model training pipeline, a model evaluation pipeline, and an actor. The "actor" is an entity that hosts an ML assisted solution using the output of the ML model inference). The term "ML training host" refers to an entity, such as a network function, that hosts the training of the model. The term "ML inference host" refers to an entity, such as a network function, that hosts model during inference mode (which includes both the model execution as well as any online learning if applicable). The ML-host informs the actor about the output of the ML algorithm, and the actor takes a decision for an action (an "action" is performed by an actor as a result of the output of an ML assisted solution). The term "model inference information" refers to information used as an input to the ML model for determining inference(s); the data used to train an ML model and the data used to determine inferences may overlap, however, "training data" and "inference data" refer to different concepts.

## Claims

1. A computer-readable medium comprising instructions which, if executed by a processor, cause the processor to:
receive a request from a management service, MnS, consumer to manage an artificial intelligence and/or machine learning, AI/ML, inference function;
manage the AI/ML inference function;
respond to the MnS consumer to indicate the result of the management of the AI/ML inference function.

2. The computer-readable medium of claim 1, wherein the instructions further cause the processor to at least one of the following: create an MOI of the AI/ML inference function, modify a created MOI of the AI/MI, inference function, delete the created MOI of the AI/ML inference function, or subscribe to a notification of changes of the created MOI of the AI/ML inference function.

3. The computer-readable medium of any one of claim 1 or claim 2, wherein the AI/ML inference function is presented by a managed object instance, MOI.

4. The computer-readable medium of claim 3, wherein the management of AI/ML inference function comprises activating and deactivating the AI/MI, inference function, and getting an activation status of the AI/ML inference function via an attribute of the MOI of the AI/ML inference function.

5. The computer-readable medium of claim 3 or claim 4, wherein the MOI of the AI/ML inference function comprises at least one MOI of an ML entity representing the ML entity loaded to the AI/ML interference function.

6. The computer-readable medium of claim 5, wherein the MOI of the ML entity is a first MOI of the ML entity, and
wherein the first MOI of the ML entity is associated with a second MOI of the ML entity.

7. The computer-readable medium of claim 6, wherei the second MOI of the ML entity represents a copy of a source ML entity, wherein the copy of the source ML entity has been loaded from an ML entity repository to the AI/ML inference function.

8. The computer-readable medium of any one of claims 5 to 7, wherein the ML entity is associated with at least one of the following contexts: a TrainingContext representing a context which the ML entity has been trained, an ExpectedRunTimeContext representing a context where the ML entity is expected to be applied, and/or a RunTimeContext representing a context where the ML is being applied.

9. The computer-readable medium of claim 8, wherein the ML entity is associated with the TrainingContext that has been added when a training of the ML entity is completed.

10. The computer-readable medium of claim 8 or claim 9, wherein the ML entity is associated with an attribute identifying a distinguished name, DN, of a source trained ML entity.

11. The computer-readable medium of any one of claims 3 to 10, wherein the instructions further cause the processor to manage the AI/ML inference function by a createMOI operation, a getMOIAttributes operation, or a modifyMOIAttributes operation.

12. The computer-readable medium of any one of claims 1 to 11, wherein the AI/ML inference function comprises at least one of a network data analytics function ,NWDAF, a management data analytics,MDA, function, an AI/ML based distributed Energy Saving function, an AI/ML based distributed Mobility Robustness Optimization function, or an AI/ML based distributed Mobility Load Balancing function.

13. The computer-readable medium of claim 12, wherein an information object class, IOC, represents the AI/ML inference function, and
wherein the IOC representing the AI/ML inference function is inherited from a ManagedFunction IOC.

14. An apparatus for a management service, MnS, producer of a cellular network, the apparatus comprising a processor configured to:
receive a request from a management service, MnS, consumer to manage an artificial intelligence and/or machine learning, AI/ML, inference function;
manage the AI/ML inference function;
respond to the MnS consumer to indicate the result of the management of the AI/ML inference function.

15. A method for a cellular network, the method comprising:
receiving, by a management service, MnS, producer, a request from an MnS consumer to manage an artificial intelligence and/or machine learning, AI/ML, inference function;
managing the AI/ML inference function; and
responding to the MnS consumer to indicate the result of the management of the AI/ML inference function.
